(19) Europäisches Patentamt

European Patent Office

Office européen des brevets

(11) **EP 1 640 149 A1**

(12) **EUROPEAN PATENT APPLICATION**
published in accordance with Art. 158(3) EPC

(43) Date of publication:
**29.03.2006 Bulletin 2006/13**

(51) Int Cl.:
**B32B 9/00** (1968.09)   **B01J 35/02** (1974.07)
**C03C 27/06** (1968.09)

(21) Application number: **04745729.6**

(22) Date of filing: **10.06.2004**

(86) International application number:
**PCT/JP2004/008099**

(87) International publication number:
**WO 2004/113064 (29.12.2004 Gazette 2004/53)**

(84) Designated Contracting States:
**DE FR GB**

(30) Priority: **20.06.2003 JP 2003176259**

(71) Applicant: **Nippon Sheet Glass Company, Limited
Osaka-shi,
Osaka 541-8559 (JP)**

(72) Inventors:
• **ANZAKI, Toshiaki,**
c/o Nippon Sheet Glass Co., Ltd.
**Osaka-shi,
Osaka 5418559 (JP)**

• **KIJIMA, Yoshifumi,**
c/o Nippon Sheet Glass Co., Ltd
**Osaka-shi,
Osaka 5418559 (JP)**
• **INAOKA, Daisuke,**
c/o Nippon Sheet Glass Co., Ltd.
**Osaka-shi,
Osaka 5418559 (JP)**

(74) Representative: **Matthews, Derek Peter
Frank B. Dehn & Co.,
179 Queen Victoria Street
London EC4V 4EL (GB)**

(54) **MEMBER HAVING PHOTOCATALYTIC ACTIVITY AND MULTILAYERED GLASS**

(57)    A member having high photocatalytic activity and multiple glass using the member are provided.

A photocatalyst layer (TiO$_2$) is formed on the surface of a substrate (glass sheet) through the intermediary of a crystalline undercoat layer (ZrO$_2$), and no dead layer is substantially present between the photocatalyst layer and the undercoat layer.

Also, provision of an amorphous layer between the substrate and the undercoat layer prevents peeling or defects between the photocatalyst layer and the substrate. In particular, by adjusting the thickness of each layer within a specific range, it is possible to obtain an article having a film configuration in which the optical feature of a reflection color, small variation of the reflectance, and a photocatalytic function are combined.

FIG. 1

Peel preventing layer (SiO$_2$) 1

Crystalline undercoat layer (ZrO$_2$) 2

Photocatalyst layer (TiO$_2$) 3

EP 1 640 149 A1

**Description**

BACKGROUND OF THE INVENTION

Field of the Invention

The present invention relates to a member having a photocatalyst layer formed on the surface thereof, and multiple glass incorporating the member.

Description of the Related Art

Photocatalysts such as anatase type titanium oxide are known to exert antifouling effect to decompose organic materials under ultraviolet light irradiation, antibacterial activity and hydrophilicity. Additionally, nowadays, photocatalysts exerting a catalytic function under visible light irradiation are attracting attention.

Formation of the above-described photocatalyst layer on the surface of a member such as glass is frequently carried out by means of vacuum film formation methods including sputtering and vapor deposition, or reduced-pressure film formation methods.

Patent Document 1; Patent Document 2, Patent Document 3, and Patent Document 4 have proposed that an undercoat layer be provided between the substrate and the photocatalyst layer for forming the photocatalyst layer on the surface of the substrate such as glass.

Patent Document 1 discloses that a barrier layer is provided between a glass substrate and a photocatalytic composition (medium) which is formed on the surface of the substrate for the purpose of preventing function deterioration of the medium caused by alkali eluted from the glass, and proposes use of zirconium oxide, in particular, amorphous zirconium oxide as the barrier layer.

Patent Document 2 discloses that a photocatalyst film is formed on a substrate in a state where an undercoat film is interposed therebetween, and in particular, zirconium oxide is used as the undercoat film and titanium oxide is used as the photocatalyst film.

Patent Document 3 discloses that a layer of a metal oxide such as zirconium oxide is interposed between a substrate (aluminum) and a photocatalyst layer so as to control oxygen diffusion from the photocatalyst layer to the substrate with the aid of the metal oxide layer.

Patent Document 4 discloses zirconium oxide as a photocatalytic material and discloses that a titanium oxide layer is formed on the exterior of the zirconium oxide.

Patent Documents 5 and 6 are other prior art materials which mention the relationship between the film thickness and the optical properties of the film in which zirconium oxide and titanium oxide are laminated.

Patent Document 5 describes an alkali diffusion preventing layer comprised of $SnO_2$ and $ZrO_2$ having a thickness of 10 nm or less, or $TiO_2$ having a thickness of 20 nm or less, and a need of reducing the thickness to obtain an article having transparency.

Patent Document 6 discloses that a high temperature stable type cubic or orthorhombic zirconium oxide layer is formed between a substrate and a titanium oxide layer, and describes that the thickness of the photocatalyst layer should be in the range which allows to be seen therethrough in a case of being applied to vehicles.

[Patent Documents]

Patent Document 1: Japanese Patent Application Publication No. 9-227167
Patent Document 2: Japanese Patent Application Publication No. 10-66878
Patent Document 3: Japanese Patent Application Publication No. 2000-312830
Patent Document 4: Japanese Patent Application Publication No. 2001-205094
Patent Document 5: Japanese Patent Application Publication No. 2000-513695; page 12, line 8
Patent Document 6: PCT International Publication (WO 02/40417); page 10, line 9

When a photocatalyst layer is formed according to the methods described in Patent Documents 1 to 5, there are cases where no photocatalytic function is exerted, or such a function is not exerted unless the thickness of the photocatalyst layer is made thick, which causes the reflectance of the article to become large and interference color to be generated, and thereby the compatibility of the preferable reflectance and color tone with the photocatalytic activity is hardly achieved.

When a crystalline zirconium oxide layer is provided as an undercoat layer for a photocatalyst layer ($TiO_2$) as disclosed in Patent Document 6, the photocatalyst layer becomes excellent in photocatalytic activity; however, when a high temperature stable type cubic or orthorhombic zirconium oxide layer needs to be formed, low heat resistant resin and the like cannot be used as a substrate. Additionally, there are drawbacks that photocatalytic members having a large size for use in construction and the like can be hardly obtained because it is technically difficult to heat large size substrates uniformly, and unevenness of the color tone occurs.

Also, a configuration in which a heat ray reflecting film (low emissivity film: Low-E film) is provided on the indoor side surface of the outdoor side glass sheet of multiple glass is well known; however, the glass sheet having the heat ray reflecting film comes to have a greenish color tone, and thereby there are problems to be solved concerning the degree of freedom in the color tone.

SUMMARY OF THE INVENTION

In order to overcome the above-described problems, according to the present invention, there is provided a member having a photocatalytic function in which a peel preventing layer whose main component is an oxide, an oxynitride and a nitride containing at least one of silicon and tin is provided on the surface of a transparent substrate, and a photocatalyst layer is formed on the peel preventing layer through the intermediary of a crystalline undercoat layer, wherein the thickness of the crystalline undercoat layer is 2 nm or more and 40 nm or less, preferably 3 nm or more and 20 nm or less, and the thickness of the photocatalyst layer is 2 nm or more and 15 nm or less, preferably 3 nm or more and 10 nm or less.

Amorphous silicon oxide can be listed as an example of the material for the above-described peel preventing layer, zirconium oxide can be listed as an example of the material for the above-described crystalline undercoat layer, and crystalline titanium oxide can be listed as an example of the material for the above-described photocatalyst layer. Particularly, for the crystalline undercoat layer, monoclinic zirconium oxide is preferable.

A comparison was made with respect to two photocatalyst layers ($TiO_2$) having the same thickness, one of which exerts photocatalytic activity but the other of which does not exert photocatalytic activity, based on electron microscopic observation. It turned out that the difference comes from the crystallinity of the photocatalyst layer. Specifically, the photocatalyst layer ($TiO_2$) in which a columnar particulate structure is formed definitely and continuously from the interface of the substrate to the surface of the layer exerts conspicuous photocatalytic activity. In contrast, the photocatalyst layer in which no columnar particulate structure is found in the neighborhood of the interface of the substrate and an amorphous layer (hereinafter referred to as a dead layer) is found instead does not exert sufficient photocatalytic activity.

The dead layer is a layer in which amorphous (noncrystalline) characteristics are predominant and the electron diffraction image is observed as a halo pattern. On the other hand, in a case where a layer is different from a dead layer, diffraction spots are observed.

When the photocatalytic member has a configuration free from the above-described dead layer, since the particulate structure is formed continuously from the undercoat layer to the photocatalyst layer, there are cases where small ions having a small ionic radius such as a chlorine ion and water diffuse from the surface to the glass substrate by passing through the voids in the particulate structure (columnar structure). When such diffusing ions and molecules reach the substrate, there are cases where anions such as chlorine ions react with alkali ions such as sodium contained in the substrate so as to generate salt, which causes the film to peel and generates defects.

The present inventors have achieved the present invention on the basis of the following knowledge:

When a photocatalyst layer is formed through the intermediary of an undercoat layer which promotes the growth of the crystal particles of the photocatalyst, the generation of the above-described dead layer can be controlled, and when a peel preventing layer is provided between the undercoat layer and the glass substrate, peeling of the film from the glass substrate and the generation of defects can be controlled, and deterioration of the photocatalytic activity can also be controlled. In addition, when a layer comprising monoclinic zirconium oxide crystal is used as the undercoat layer, it is possible to further enhance the effect for promoting the growth of the crystal particles of the photocatalyst, and when the thickness of the crystalline undercoat layer and the thickness of the photocatalyst layer are limited to the particular ranges respectively, it is possible to achieve low reflectance, a pale blue reflection color tone, and eliminate reflectance unevenness and color tone unevenness. As a result, it becomes possible to be applied to glass sheets having a large area for use in construction which emphasizes a particular aspect of design such as a feeling of refreshment.

The above-described member having a photocatalytic function can be applied to glass sheets for use in construction, in particular, as outdoor side glass sheets of multiple glass. In this instance, the configuration is as follows: a peel preventing layer whose main component is an oxide, an oxynitride and a nitride containing at least one of silicon and tin is provided on the outdoor side surface of an outdoor side glass sheet; a photocatalyst layer having a thickness of 2 nm or more and 15 nm or less, preferably 3 nm or more and 5 nm or less is formed on the peel preventing layer through the intermediary of a crystalline undercoat layer having a thickness of 2 nm or more and 25 nm or less, preferably 3 nm or more and 5 nm or less; and a heat ray reflecting film is formed on the indoor side surface of the outdoor side glass sheet.

In the above-described member having a photocatalytic function or the above-described multiple glass, the thickness of the peel preventing layer is 2 nm to 200 nm, preferably 5 nm to 100 nm. When the thickness of the peel preventing layer is less than 2 nm, the effects for preventing the film from peeling and defects from being generated are not sufficient. On the other hand, when the thickness is greater than 200 nm, the above-described effects for preventing the film from peeling and defects from being generated are not so largely improved, and hence, from the economic viewpoint, the upper limit of the thickness of the peel preventing layer is preferably 200 nm. When the thickness of the peel preventing layer is greater than 5 nm, the water blocking effect is more preferably enhanced and generation of water soluble salt in the interface between the substrate and the film comes to be completely controlled. Also, this effect is sufficiently exerted even in a case where the thickness of the above-described peel preventing layer is 100 nm or less, and thus, the more preferable upper limit of the thickness of the peel preventing layer is 100 nm. However, when a peel preventing layer having a refractive index largely different from the refractive index of the substrate is adopted, the thickness of the peel preventing layer is made as thin as possible so that the color tone may not be altered.

The above-described peel preventing layer blocks the ions having a small ionic radius such as chlorine ions and water from the surface, and prevents these ions and molecules from reaching the glass substrate and consequently prevents water soluble reactive salt from being generated, so that peeling of the undercoat layer from the substrate caused by dissolution of the salt in water can be controlled.

When a glass substrate manufactured by a float method is adopted as the substrate, a tin modification layer or an amorphous tin oxide layer formed on the contact surface of the glass substrate with the tin bath can be used as the peel preventing layer.

Also, in the present invention, it is preferable that the above-described undercoat layer and photocatalyst layer are made of a crystalline metal oxide or a metal oxynitride respectively, and at least one of the distances between oxygen atoms in the crystals which constitute the undercoat layer is approximate to one of the distances between oxygen atoms in the crystals which constitute the photocatalyst layer. When the photocatalyst layer is formed on the undercoat layer, a combination of the undercoat layer and the photocatalyst layer which satisfies the above-described condition allows the photocatalyst layer to grow easily and quickly as a crystalline one with the aid of the oxygen atoms as the common portions.

Since the distances between oxygen atoms of monoclinic zirconium oxide and anatase type titanium oxide are approximate in a certain area (within the range from 90 to 110%), when a monoclinic crystalline zirconium compound is adopted for the undercoat layer, anatase type titanium oxide crystals can be easily formed thereon.

For the undercoat layer, zirconium oxide to which a small amount of nitrogen, tin or carbon is added, and zirconium oxynitride are preferably used as well as the above-described monoclinic zirconium oxide.

For the photocatalyst layer, titanium oxide to which a small amount of nitrogen, tin or carbon is added, and titanium oxynitride are preferably used as well as the above-described anatase type titanium oxide.

As for monoclinic zirconium oxide preferable for the undercoat layer, the electron diffraction image obtained by irradiating the cross section of the layer of the monoclinic zirconium oxide perpendicularly includes an image from the (111) plane or the (-111) plane, and the interplanar spacing with respect to the (111) orientation plane is 2.6 to 3.0 Å and the interplanar spacing with respect to the (-111) orientation plane is 3.0 to 3.4 Å.

In a case where the interplanar spacing of zirconium oxide is not in the above-described ranges, the zirconium oxide suffers from deformation in the crystals. Consequently, the film stress becomes great, and peeling easily occurs. Also, since the oxygen positions in the crystal planes are displaced due to the deformation, the consistency of the oxide such as titanium oxide or the like constituting the photocatalyst layer with the oxygen positions becomes low, and thereby no desirable crystal growth of the photocatalyst layer is observed.

As for anatase type titanium oxide preferable for the photocatalyst layer, the electron diffraction image obtained by irradiating the cross section of the layer of the anatase type titanium oxide includes the diffraction image from the (101) plane, and the interplanar spacing with respect to the (101) orientation plane is 3.3 to 3.7 Å.

In a case where the interplanar spacing of titanium oxide is not in the above-described range, the titanium oxide suffers from deformation in the crystals. Consequently, the film stress becomes great, and peeling easily occurs. Also, since the oxygen positions in the crystal planes are displaced due to the deformation, the consistency of the oxide such as zirconium oxide or the like constituting the undercoat layer with the oxygen positions becomes low, and thereby no desirable crystal growth of the titanium oxide is observed.

The methods for forming the undercoat layer and the photocatalyst layer may be any of a liquid phase method (a sol-gel method and a liquid phase precipitation method), a vapor phase method (a sputtering method, a vacuum deposition method and a CVD method) and the like, and these methods have the effect of improving the crystallinity of the photocatalyst layer with the aid of the undercoat film. However, a vapor phase method such as a sputtering method, a deposition method and the like is more suitable because it is serves to grow crystals and thereby it shows particularly significant effect in the present invention.

Also, doping of metals in the photocatalyst layer can promote carrier generation, and accordingly enhance the photocatalytic effect.

Examples of the doped metals include Zn, Mo and Fe, which are suitably high in the effect of improving the photocatalytic activity. With respect to Zn and Mo, the addition amount is preferably 0.1 mass % or more and 1 mass % or less, more preferably 0.2 mass % or more and 0.5 mass % or less. With respect to Fe, the content thereof in the photocatalyst layer is made to be 0.001 mass % to 0.5 mass %. These limitations are based on the fact that the effect becomes too small in a case where the addition amount is too small, while too great an amount causes disorder in the crystal structure of the photocatalyst and generation of a recombination center, and thereby the photocatalytic activity is deteriorated.

By forming a hydrophilic thin film on the surface of the photocatalyst layer, it is possible to increase the hydrophilic effect. The hydrophilic thin film is preferably made of at least one oxide selected from the group consisting of silicon oxide, zirconium oxide, germanium oxide and aluminum oxide. Among these oxides, silicon oxide is preferable from the viewpoint of the hydrophilicity improvement effect and durability. It is preferable that the hydrophilic thin film is porous. When the hydrophilic thin film is porous, it is possible to enhance the water holding effect and the maintenance performance of the hydrophilicity. Also, the active species such as active oxygen generated in the surface of the photocatalyst layer by irradiation of ultraviolet light can reach the surface of an article, so that the photocatalytic activity of the photocatalyst layer is not so significantly damaged.

As the method for forming a porous hydrophilic thin film, a liquid phase method (a sol-gel method and a liquid phase precipitation method) and a vapor phase method (a sputtering method, a vacuum deposition method and a CVD method) are used. If the generally known sol-gel method is employed, a porous thin film can be manufactured easily; however, when organic polymer and higher alcohol are added into the raw material solution of the sol gel method, a porous thin film can be manufactured more easily. As for the vapor phase method such as a sputtering method, by adjusting the film-formation conditions so as to increase the dangling bonds in the oxide, for example, by increasing the gas pressure and reducing the oxygen amount in the gas at the time of sputtering, it becomes possible to manufacture a porous thin film.

The thickness of the hydrophilic thin film is preferably 1 nm or more and 30 nm or less. If the thickness is smaller than 1 nm, the hydrophilicity is insufficient. In contrast, if the thickness is greater than 30 nm, the photocatalytic activity of the photocatalyst layer is damaged. The more preferable range of the thickness is 1 nm or more and 20 nm or less. In this range, the maintenance performance of the hydrophilicity is high when it is not irradiated with light.

BRIEF DESCRIPTION OF THE DRAWINGS

FIG. 1 is a schematic sectional view of a member having a photocatalytic function according to the present invention;
FIG. 2 is a schematic sectional view of multiple glass according to the present invention;
FIG. 3 is a graph showing the color tone variation of the transmitted light observed when the film thickness of the $SiO_2$ layer was varied at a pitch of 10 nm with the fixed film thickness values of 10 nm for the $ZrO_2$ and $TiO_2$ layers;
FIG. 4 is a graph showing the color tone variation of the reflected light observed when the film thickness of the $SiO_2$ layer was varied at a pitch of 10 nm with the fixed film thickness values of 10 nm for the $ZrO_2$ and $TiO_2$ layers;
FIG. 5 is a graph showing the visible light reflectance observed when the film thickness of the $TiO_2$ layer was varied at a pitch of 5 nm with the fixed film thickness values of 10 nm for the $SiO_2$ and $ZrO_2$ layers;
FIG. 6 is a graph showing the visible light reflectance observed when the film thickness of the $ZrO_2$ layer was varied at a pitch of 5 nm with the fixed film thickness values of 10 nm for the $SiO_2$ and $TiO_2$ layers;
FIG. 7 is a graph showing the visible light reflectance of multiple glass (with a Low-E film) observed when the film thickness of the $TiO_2$ layer was varied at a pitch of 5 nm with the fixed film thickness values of 10 nm for the $SiO_2$ and $ZrO_2$ layers;
FIG. 8 is a graph showing the visible light reflectance of multiple glass (with a Low-E film) observed when the film thickness of the $ZrO_2$ layer was varied at a pitch of 5 nm with the fixed film thickness values of 10 nm for the $SiO_2$ and $TiO_2$ layers;
FIG. 9 is a graph showing the variation of the distance between the chromaticity coordinates (D) observed when the film thickness of the $TiO_2$ layer was varied at a pitch of 5 nm with the fixed film thickness values of 10 nm for the $SiO_2$ and $ZrO_2$ layers;
FIG. 10 is a graph showing the reflection color tone variation for the distance between the chromaticity coordinates (D) range of 3.5 or less, corresponding to FIG. 9;
FIG. 11 is a graph showing the variation of the distance between the chromaticity coordinates (D) observed when the film thickness of the $ZrO_2$ layer was varied at a pitch of 5 nm with the fixed film thickness values of 10 nm for the $SiO_2$ and $TiO_2$ layers;
FIG. 12 is a graph showing the reflection color tone variation for the distance between the chromaticity coordinates (D) range of 3.5 or less, corresponding to FIG. 11;

FIG. 13 is a graph showing the variation of the distance between the chromaticity coordinates (D) of multiple glass observed when the film thickness of the $TiO_2$ layer was varied at a pitch of 5 nm with the fixed film thickness values of 10 nm for the $SiO_2$ and $ZrO_2$ layers;

FIG. 14 is a graph showing the reflection color tone variation for the distance between the chromaticity coordinates (D) range of 3.5 or less, corresponding to FIG. 13;

FIG. 15 is a graph showing the variation of the distance between the chromaticity coordinates (D) of multiple glass observed when the film thickness of the $ZrO_2$ layer was varied at a pitch of 5 nm with the fixed film thickness values of 10 nm for the $SiO_2$ and $TiO_2$ layers;

FIG. 16 is a graph showing the reflection color tone variation for the distance between the chromaticity coordinates (D) range of 3.5 or less, corresponding to FIG. 15; and

FIG. 17 is a graph showing the color tone variation of multiple glass comprising glass sheets, each sheet being made of an $SiO_2$ layer, a $ZrO_2$ layer and a $TiO_2$ layer having the same thickness.

DETAILED DESCRIPTION OF THE PREFERRED EMBODIMENTS

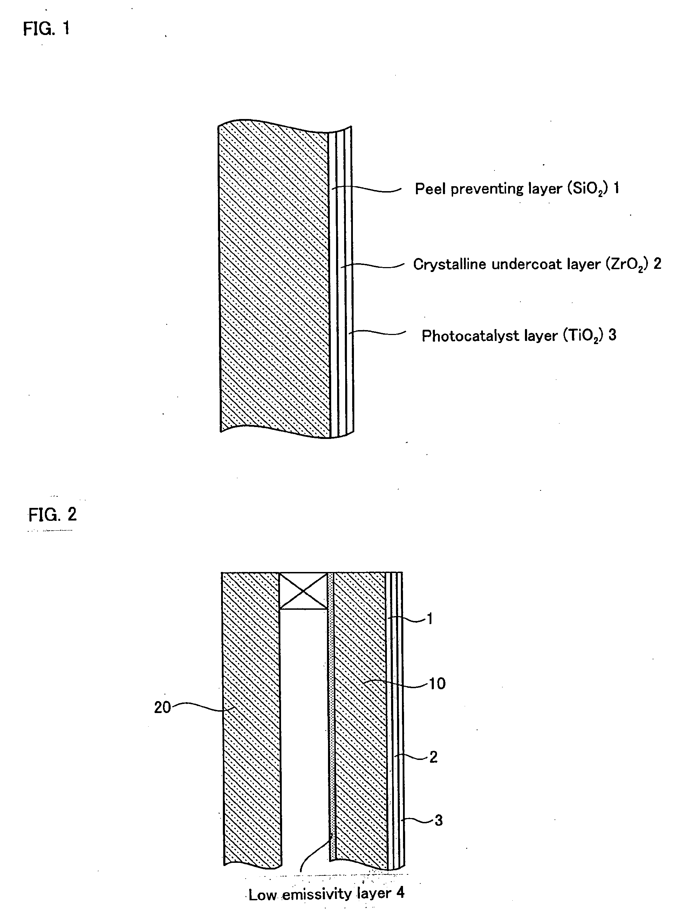

Description will be made below on an embodiment of the present invention on the basis of the accompanying drawings. FIG. 1 is a schematic sectional view of a member having a photocatalytic function according to the present invention, and FIG. 2 is a schematic sectional view of multiple glass in which the member having a photocatalytic function is used as the outdoor side glass sheet.

In the member having a photocatalytic function shown in FIG. 1, an $SiO_2$ layer is provided as a peel preventing layer 1 on the surface of a transparent substrate such as a glass sheet, a $ZrO_2$ layer is provided as a crystalline undercoat layer 2 on the peel preventing layer 1, and a $TiO_2$ layer is provided as a photocatalyst layer 3 through the intermediary of the crystalline undercoat layer 2. The thickness of the $SiO_2$ layer is 2 nm or more and 200 nm or less, the thickness of the $ZrO_2$ layer is 2 nm or more and 40 nm or less, and the thickness of the $TiO_2$ layer is 2 nm or more and 15 nm or less.

In the multiple glass shown in FIG. 2, an outdoor side glass sheet 10 and an indoor side glass sheet 20 are arranged to face each other through the intermediary of a spacer 30 so as to define an extremely fine space therebetween. An $SiO_2$ layer is provided as a peel preventing layer 1 on the outdoor side surface of the outdoor side glass sheet 10, a $ZrO_2$ layer is provided as a crystalline undercoat layer 2 on the peel preventing layer 1, and a $TiO_2$ layer is provided as a photocatalyst layer 3 through the intermediary of the crystalline undercoat layer 2. Also, a low emissivity film 4 (Low-E film) is formed on the indoor side surface of the outdoor side glass sheet 10.

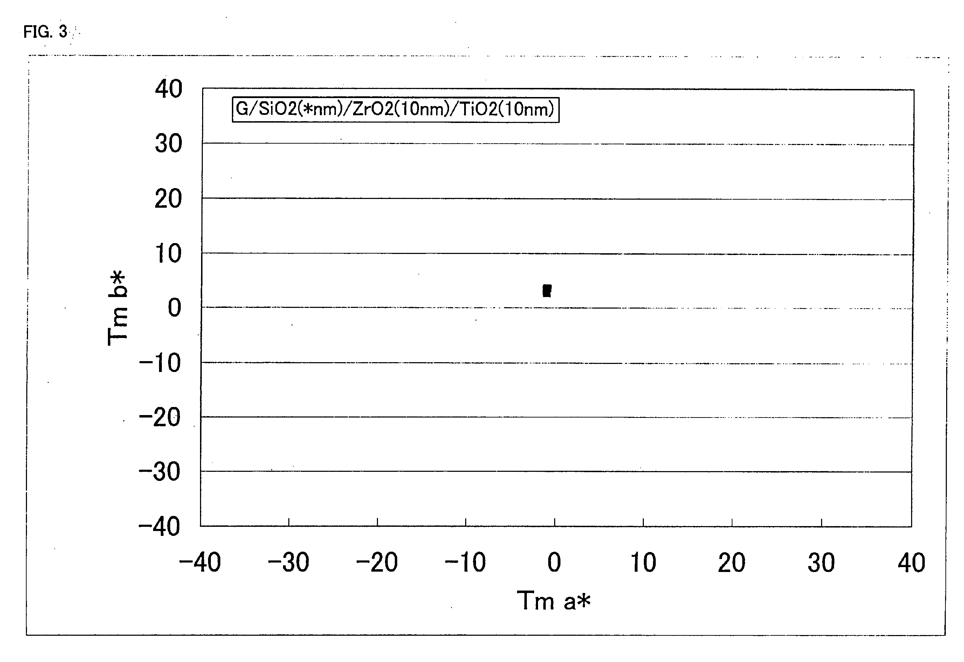

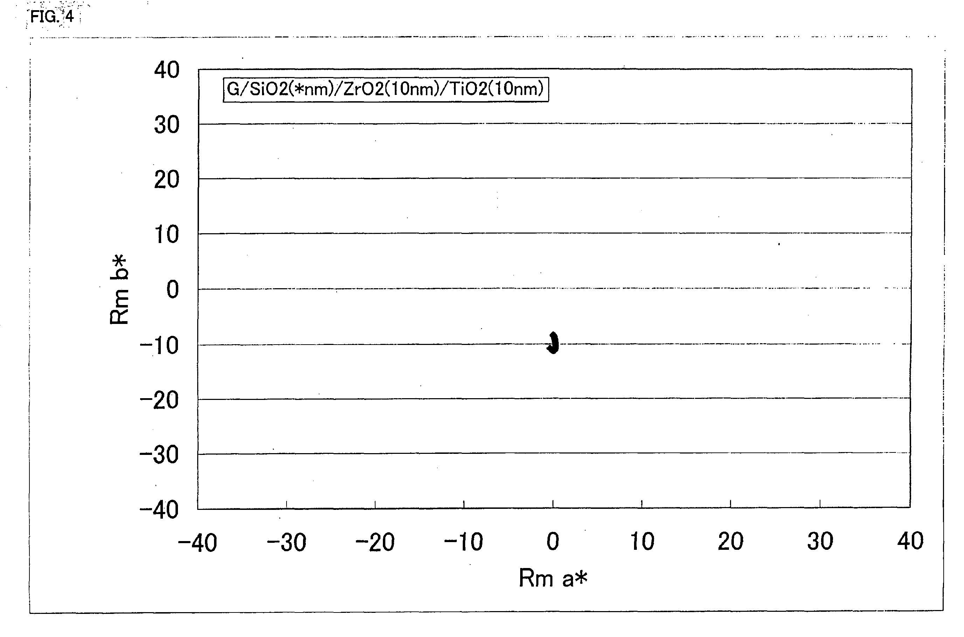

FIGS. 3 and 4 are graphs showing the color tone variation of the transmitted light and the color tone variation of the reflected light, respectively, observed when the film thickness of the $SiO_2$ layer was varied at a pitch of 10 nm with the fixed film thickness values of 10 nm for the $ZrO_2$ and $TiO_2$ layers. As can be seen from these figures, even if the layer thickness is varied with respect to $SiO_2$ having substantially the same refractive index as that of glass, the color tone variation is hardly observed. The color tone variation becomes greater as the refractive index difference with respect to glass is greater, and the variation ratio is increased depending on the increase of the film thickness.

In this regard, the color tone (a*, b*) was calculated from the spectrum measured by a spectrophotometer on the basis of CIE 1976 UCS.

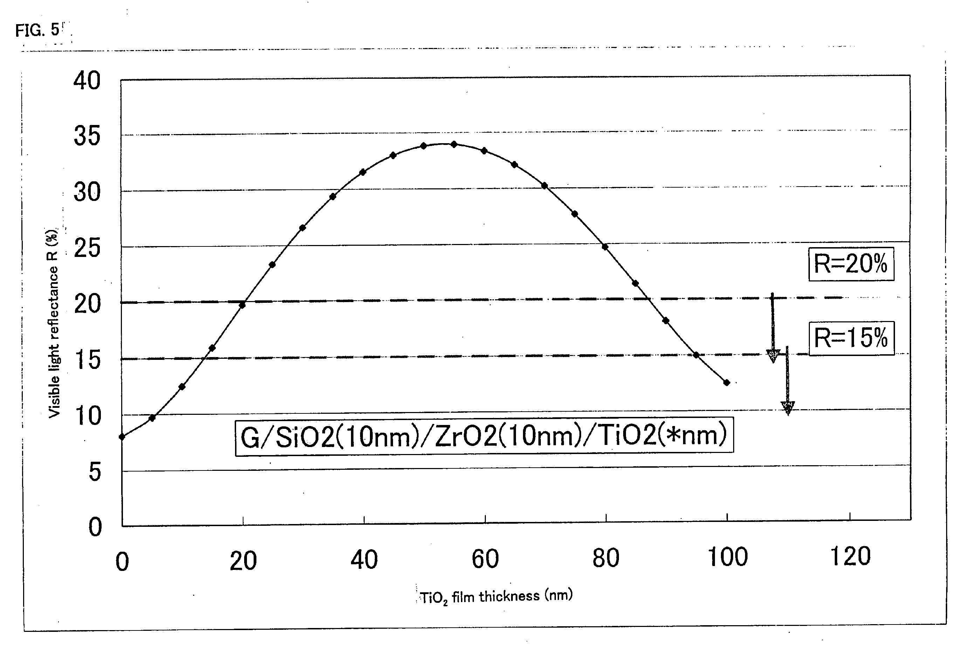

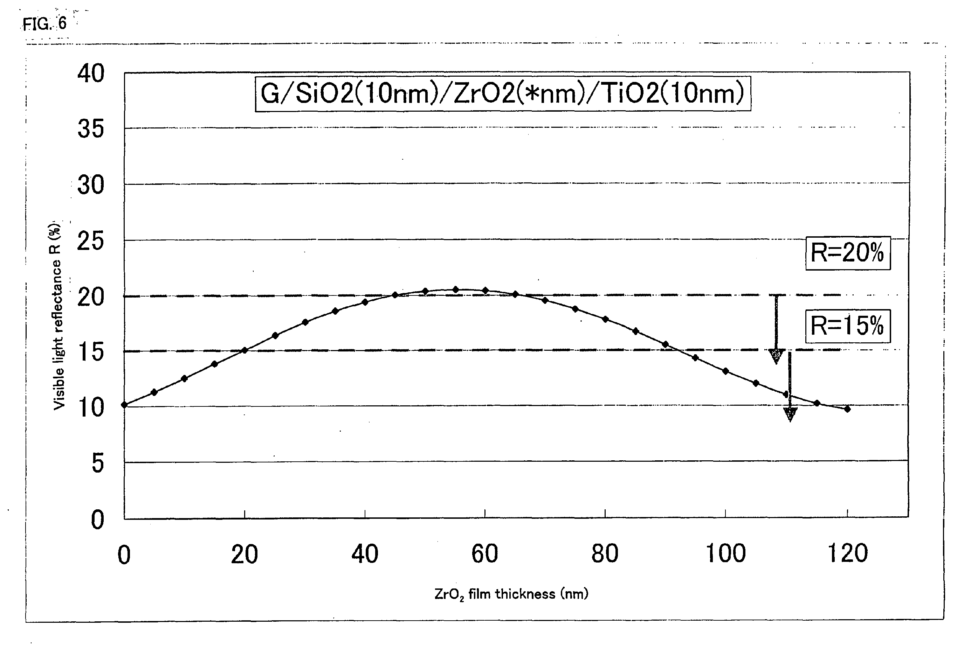

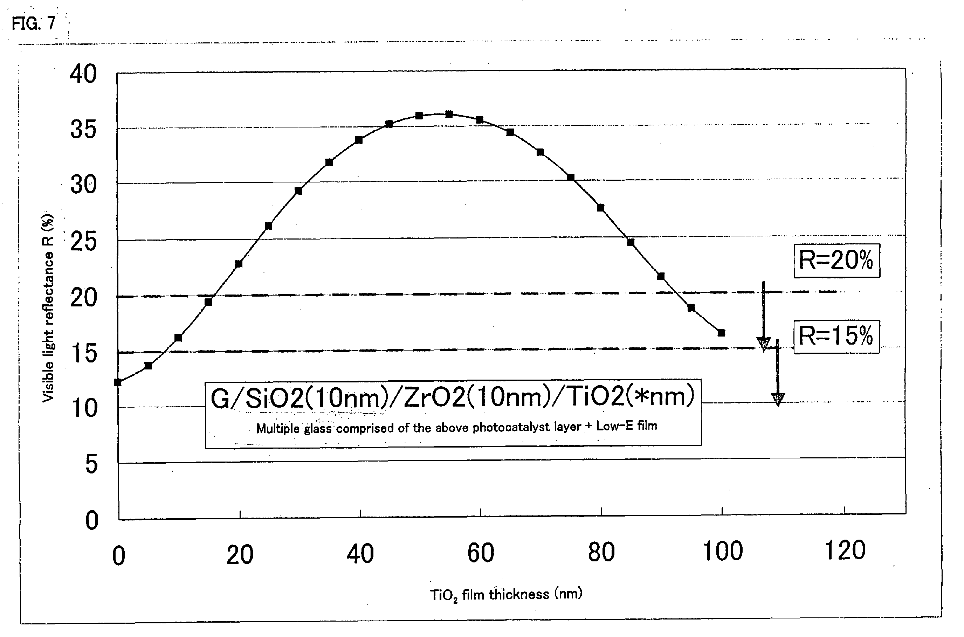

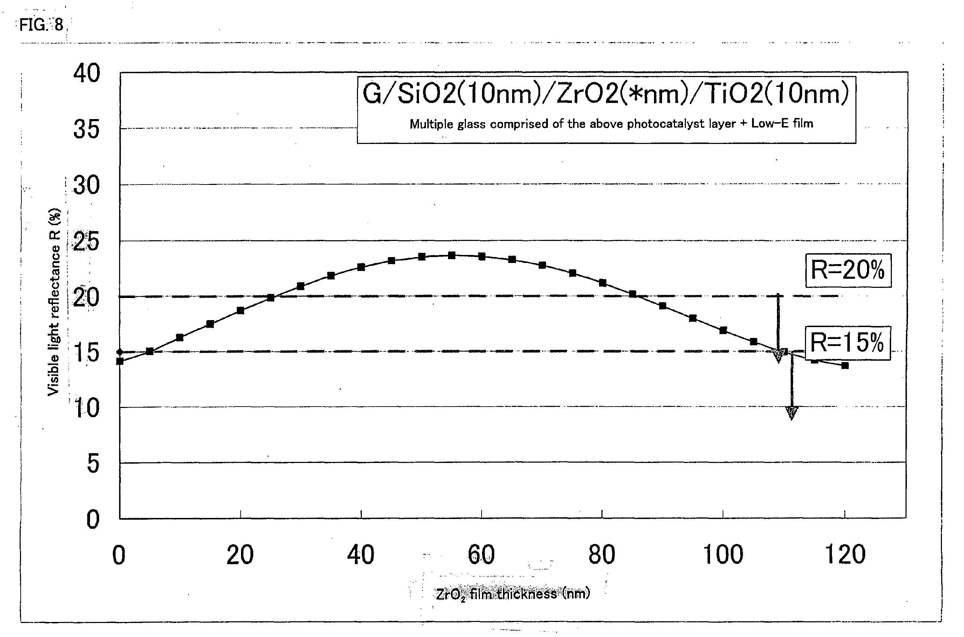

FIGS. 5 to 8 are graphs showing the relationship between the film thickness values of each layer and the visible light reflectance values (R): FIG. 5 shows the visible light reflectance observed when the film thickness of the $TiO_2$ layer was varied at a pitch of 5 nm with the fixed film thickness values of 10 nm for the $SiO_2$ and $ZrO_2$ layers; FIG. 6 shows the visible light reflectance observed when the film thickness of the $ZrO_2$ layer was varied at a pitch of 5 nm with the fixed film thickness values of 10 nm for the $SiO_2$ and $TiO_2$ layers; FIG. 7 shows the visible light reflectance of multiple glass (with a Low-E film) observed when the film thickness of the $TiO_2$ layer was varied at a pitch of 5 nm with the fixed film thickness values of 10 nm for the $SiO_2$ and $ZrO_2$ layers; and FIG. 8 shows the visible light reflectance of multiple glass (with a Low-E film) observed when the film thickness of the $ZrO_2$ layer was varied at a pitch of 5 nm with the fixed film thickness values of 10 nm for the $SiO_2$ and $TiO_2$ layers.

In this regard, the reflectance value was calculated from the results measured by a spectrophotometer on the basis of JIS R3106.

As can be seen from these figures, the visible light reflectance becomes high when the thickness values of the $TiO_2$ layer and the $ZrO_2$ layer are 50 to 60 nm, and they are not in this range, the visible light reflectance is deteriorated. The visible light reflectance (R) is 20% or less, preferably 15% or less.

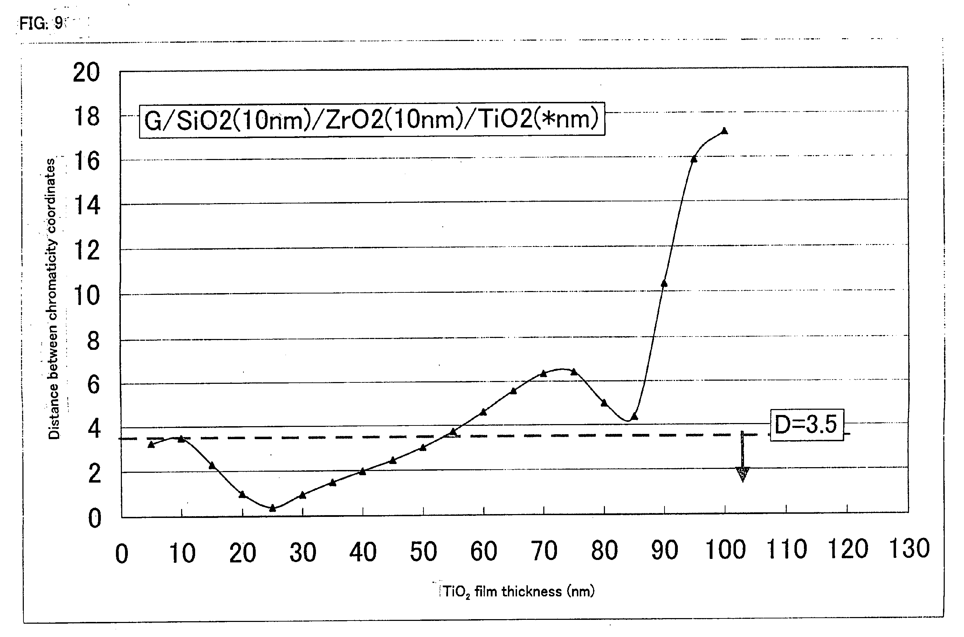

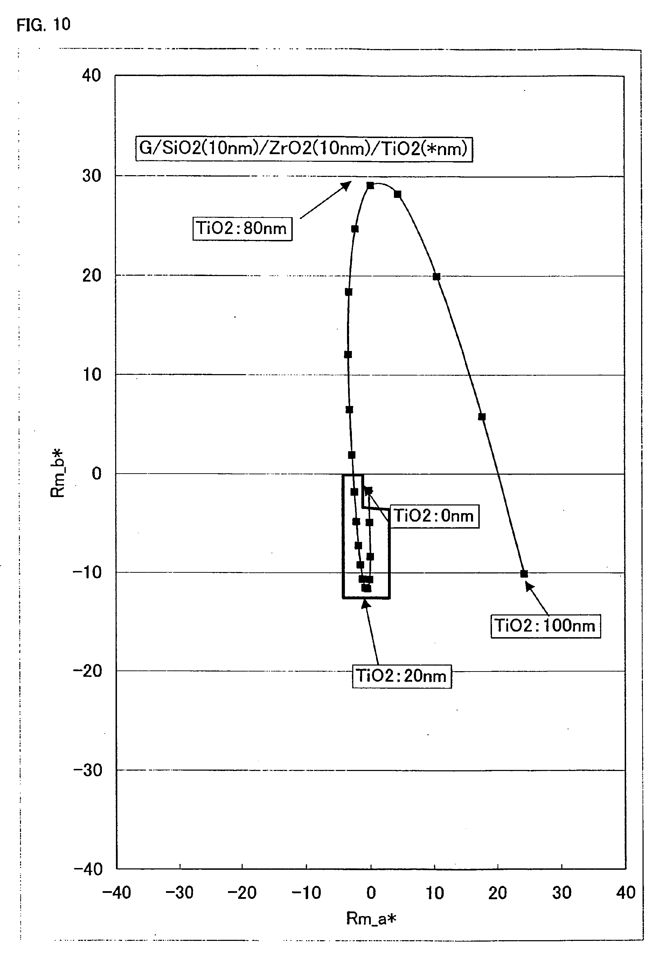

FIGS. 9 to 16 are graphs showing the distance between the chromaticity coordinates (D), and the reflection color tone variation corresponding to this distance; FIG. 9 is a graph showing the variation of the distance between the chromaticity coordinates (D) observed when the film thickness of the $TiO_2$ layer was varied at a pitch of 5 nm with the fixed film thickness values of 10 nm for the $SiO_2$ and $ZrO_2$ layers; FIG. 10 is a graph showing the reflection color tone variation for the distance between the chromaticity coordinates (D) range of 3.5 or less, corresponding to FIG. 9; FIG.

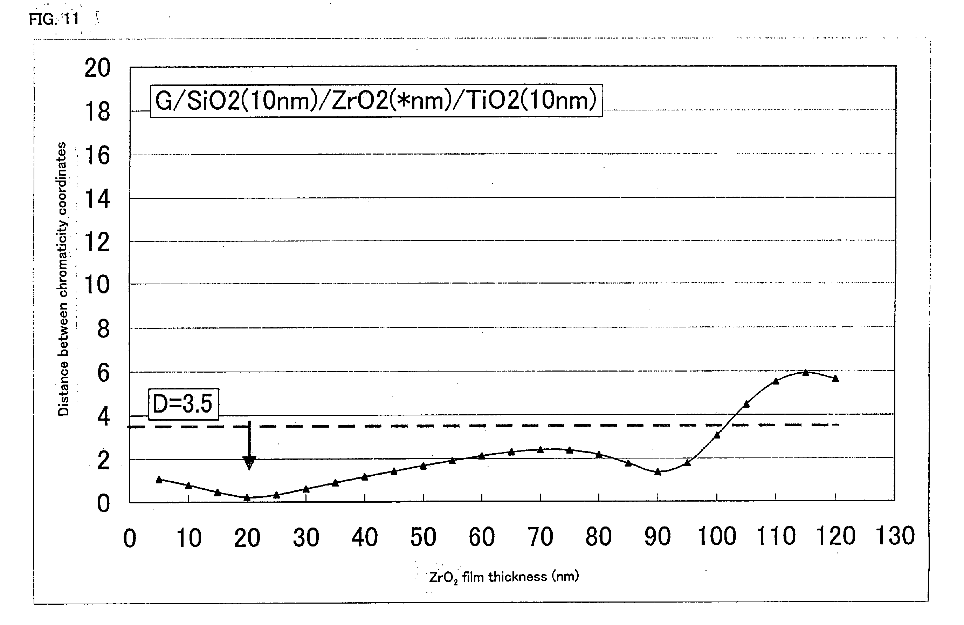

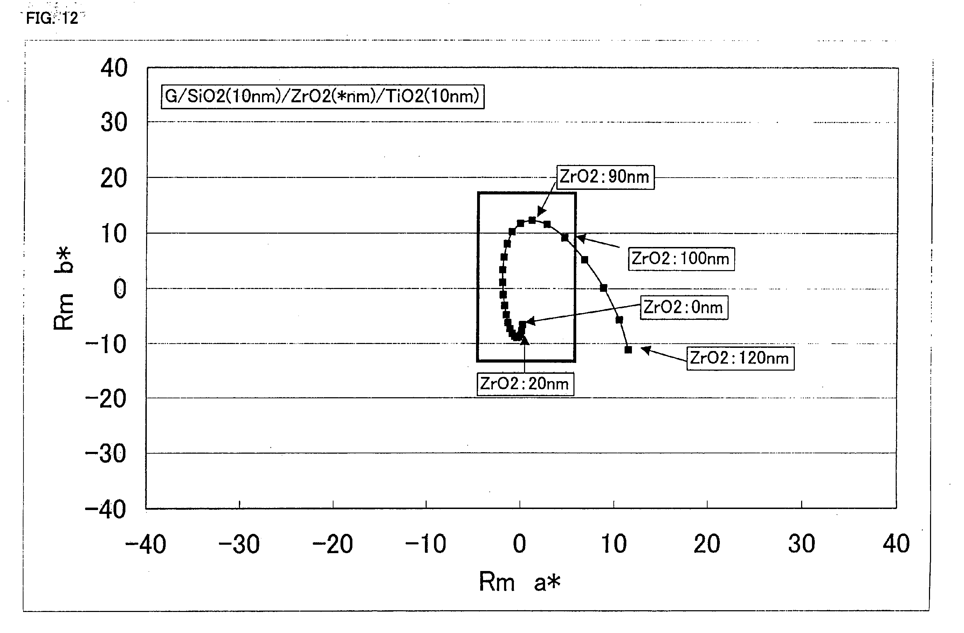

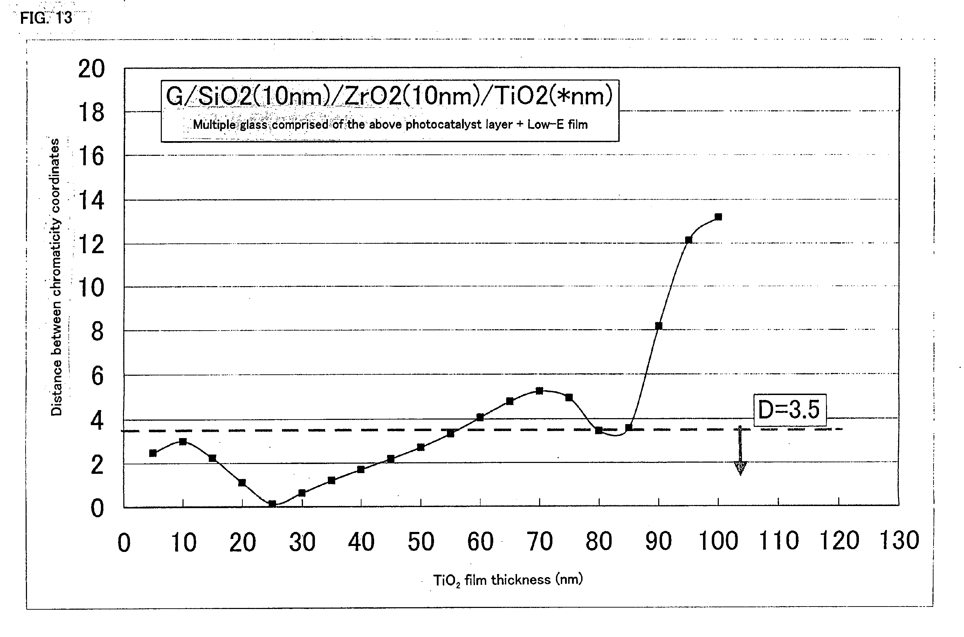

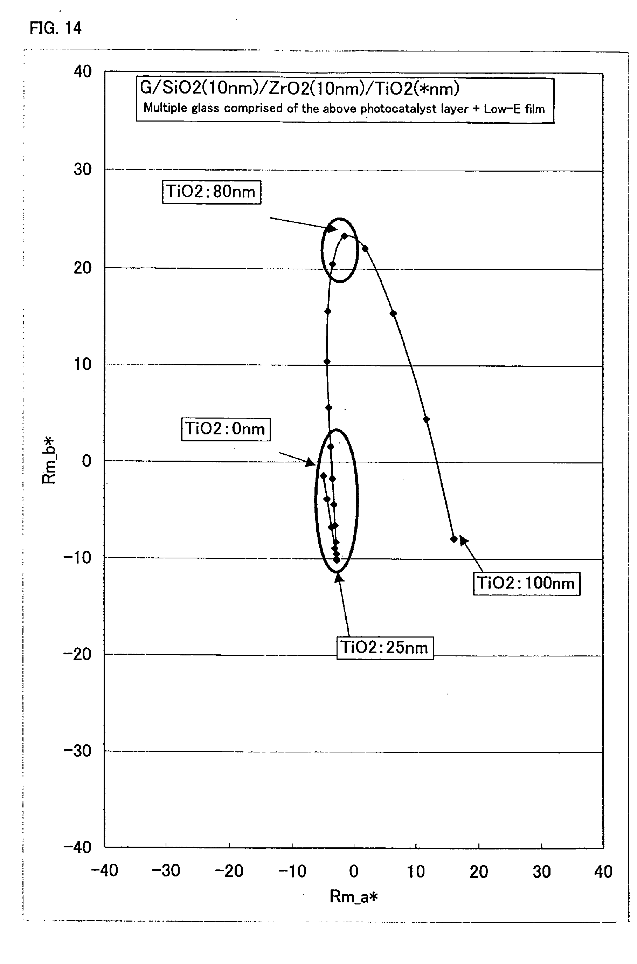

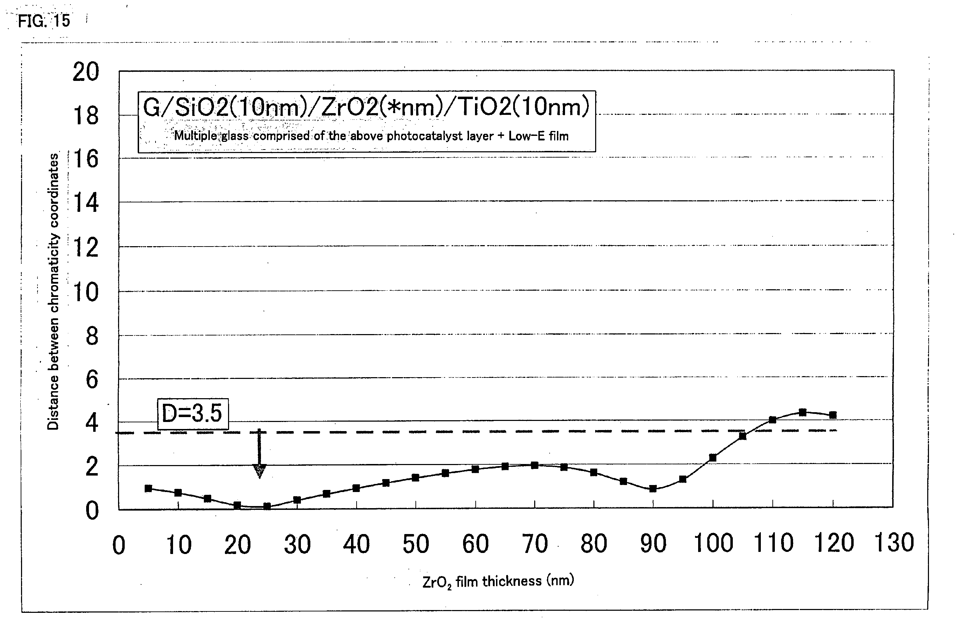

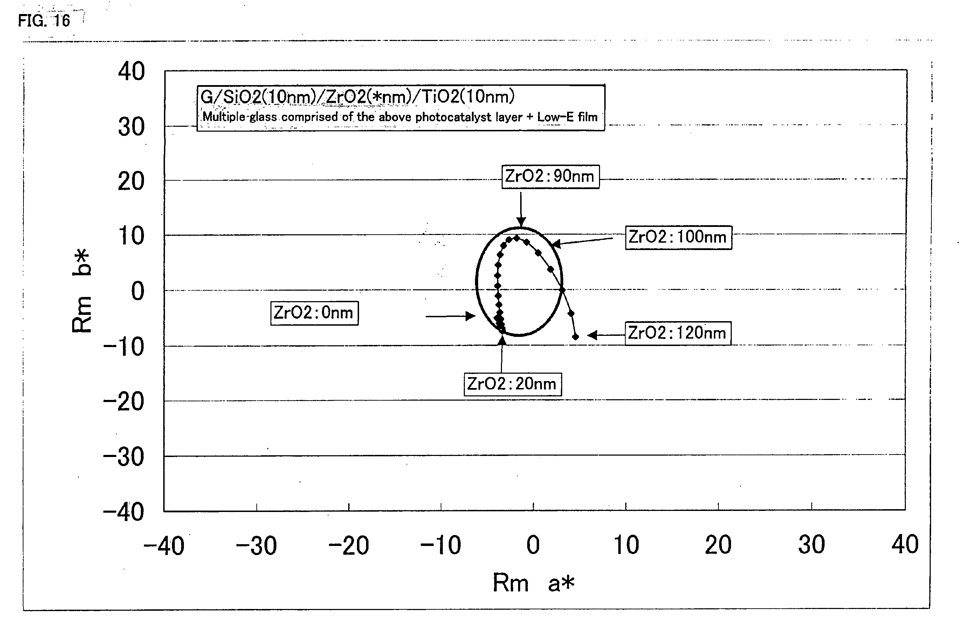

11 is a graph showing the variation of the distance between the chromaticity coordinates (D) observed when the film thickness of the $ZrO_2$ layer was varied at a pitch of 5 nm with the fixed film thickness values of 10 nm for the $SiO_2$ and $TiO_2$ layers; FIG. 12 is a graph showing the reflection color tone variation for the distance between the chromaticity coordinates (D) range of 3.5 or less, corresponding to FIG. 11; FIG. 13 is a graph showing the variation of the distance between the chromaticity coordinates (D) of multiple glass observed when the film thickness of the $TiO_2$ layer was varied at a pitch of 5 nm with the fixed film thickness values of 10 nm for the $SiO_2$ and $ZrO_2$ layers; Fig. 14 is a graph showing the reflection color tone variation for the distance between the chromaticity coordinates (D) range of 3.5 or less, corresponding to FIG. 13; FIG. 15 is a graph showing the variation of the distance between the chromaticity coordinates (D) of multiple glass observed when the film thickness of the $ZrO_2$ layer was varied at a pitch of 5 nm with the fixed film thickness values of 10 nm for the $SiO_2$ and $TiO_2$ layers; and FIG. 16 is a graph showing the reflection color tone variation for the distance between the chromaticity coordinates (D) range of 3.5 or less, corresponding to FIG. 15. When D is 3.5 or less, even if the film thickness varies in the manufacture, the color unevenness is not conspicuous, which is preferable from the viewpoint of quality control. It is apparent that the magnitude of D indicates the degree of the color's inclination to vary, and the present invention has discovered the film thickness range of each layer in which D can be limited to a certain range.

In this regard, the distance between the chromaticity coordinates refers to a distance between the chromaticity coordinate before the film thickness is varied and the chromaticity coordinate after the film thickness is varied by 5 nm. The calculation formula is as follows:

$$D=\{(a^*_n - a^*_{n-1})^2 + (b^*_n - b^*_{n-1})^2\}^{0.5}$$

The results are shown in FIG. 1, and the results demonstrate the following: With respect to an article comprised of a single film and a single glass sheet (the photocatalyst layer is formed only on one surface of the glass sheet), in view of the color variation ratio, the reflection color (the range where the color is blue), the visible light reflectance, and the hydrophilicity, the thickness of the $ZrO_2$ layer is 2 nm to 40 nm, preferably 3 nm to 20 nm, and the thickness of the $TiO_2$ layer is 2 nm to 15 nm, preferably 3 nm to 10 nm.

With respect to multiple glass (with a Low-E film) using the above-described single glass sheet, the thickness of the $ZrO_2$ layer is 2 nm to 25 nm, preferably 3 nm to 5 nm, and the thickness of the $TiO_2$ layer is 2 nm to 15 nm, preferably 3 nm to 5 nm.

In this regard, as the evaluation method of the photocatalytic activity (hydrophilicity), the hydrophilicity evaluation was carried out by measuring the contact angle of water after UV irradiation for 60 minutes with a black lamp (the central wavelength: 365 nm) at an illuminance of 1 mW/cm$^2$.

Table 1

| | | Area of small color variation ratio | Range for pale blue reflection color | Range of R≤20% | Range of R≤15% | Range of θ≤20° | Range of θ≤15° | Preferable range (Contact angle ≤20°, R<20%) | Preferable range (Contact angle ≤15°, R<15%) |
|---|---|---|---|---|---|---|---|---|---|
| | | Film thickness for D≤3.5 | -5<a*<5, -10≤b*≤0 | | | | | | |
| Single film/ single sheet | ZrO₂ film thickness | ≤100 nm | 0 - 55 nm | 0 - 40 nm | 0 - 20 nm | ≥2 nm | ≥3 nm | 2 nm - 40 nm | 3 nm - 20 nm |
| | TiO₂ film thickness | ≤55 nm | 0 - 15 nm, 35 - 50 nm | 0 - 20 nm | 0 - 10 nm | ≥2 nm | ≥3 nm | 2 nm - 15 nm | 3 nm - 10 nm |
| Multiple + Low-E | ZrO₂ film thickness | 0 - 105 nm | 0 - 60 nm | 0 - 25 nm | 0 - 5 nm | ≥2 nm | ≥3 nm | 2 nm - 25 nm | 3 nm - 5 nm |
| | TiO₂ film thickness | 0 - 55 nm | 0 - 20 nm, 30 - 50 nm | 0 - 15 nm | 0 - 5 nm | ≥2 nm | ≥3 nm | 2 nm - 15 nm | 3 nm - 5 nm |

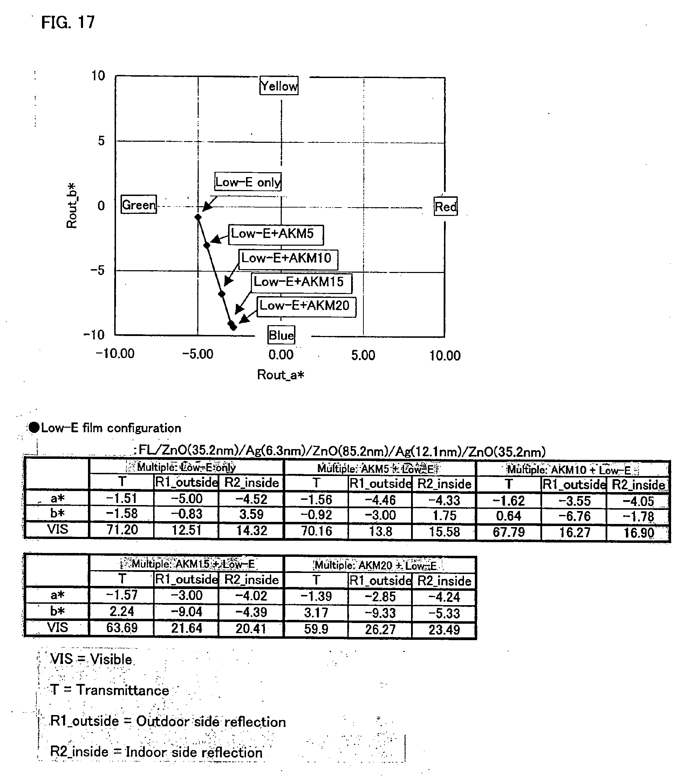

FIG. 17 is a graph showing the color tone variation of multiple glass comprising glass sheets, each sheet being made of an $SiO_2$ layer, a $ZrO_2$ layer and a $TiO_2$ layer having the same thickness. In FIG. 17,
AKM5 stands for $G/SiO_2(5 \text{ nm})/ZrO_2(5 \text{ nm})/TiO_2(5 \text{ nm})$;
AKM10 stands for $G/SiO_2(10 \text{ nm})/ZrO_2(10 \text{ nm})/TiO_2(10 \text{ nm})$;
AKM15 stands for $G/SiO_2(15 \text{ nm})/ZrO_2(15 \text{ nm})/TiO_2(15 \text{ nm})$; and
AKM20 stands for $G/SiO_2(20 \text{ nm})/ZrO_2(20 \text{ nm})/TiO_2(20 \text{ nm})$,
where G refers to glass and the mark / denotes lamination of a layer; and
The configuration of the low emissivity film 4 is as follows:

$$\text{Low-E=G/ZnO(35.2 nm)/Ag(6.3 nm)/ZnO(85.2 nm)/Ag(12.1 nm)/ZnO(35.2 nm)}$$

As can be seen from FIG. 17, compared to the case where only the Low-E film is used, in the case of the multiple glass in which the photocatalyst layer according to the present invention is formed on the first surface (the outdoor side surface) of the outdoor side glass sheet, the reflection color observed from the outdoor side turns from a green color tone to a blue color tone.

As described above, according to the present invention, when the photocatalyst layer is formed on the surface of the substrate, the crystalline undercoat layer is provided, and the photocatalyst layer is formed on the undercoat layer by continuously growing the photocatalyst crystals directly to the surface. Also, peeling of the film and defects are controlled by providing the peel preventing layer between the substrate and the undercoat layer. Consequently, it is possible to provide a member having high photocatalytic activity which can be applied to all the members such as window panes for use in construction, glass plates for use in displays, glass substrates for use in DNA analysis, portable information devices, sanitary equipments, medical equipments, electronic devices, biomedical test chips, materials for hydrogen/oxygen generation devices and the like. In particular, it is possible to provide an article having a film configuration in which certain optical features, small variation of the features, and a photocatalytic function are combined.

Also, according to the present invention, the thicknesses of the crystalline undercoat layer and the photocatalyst layer are limited to certain ranges, respectively. As a result, the reflection color tone can be made blue, the commercial value can be improved, and application to multiple glass can be expected.

## Claims

1. A member having a photocatalytic function comprising:

   a transparent substrate;
   a peel preventing layer, whose main component is an oxide, an oxynitride and a nitride containing at least one of silicon and tin, provided on the surface of said transparent substrate;
   a crystalline undercoat layer provided on said peel preventing layer; and
   a photocatalyst layer formed on said crystalline undercoat layer,

   wherein the thickness of said crystalline undercoat layer is 2 nm or more and 40 nm or less, and the thickness of said photocatalyst layer is 2 nm or more and 15 nm or less.

2. A member having a photocatalytic function comprising:

   a transparent substrate;
   a peel preventing layer, whose main component is an oxide, an oxynitride and a nitride containing at least one of silicon and tin, provided on the surface of said transparent substrate;
   a crystalline undercoat layer provided on said peel preventing layer; and
   a photocatalyst layer formed on said crystalline undercoat layer,

   wherein the thickness of said crystalline undercoat layer is 3 nm or more and 20 nm or less, and the thickness of said photocatalyst layer is 3 nm or more and 10 nm or less.

3. The member having a photocatalytic function according to claim 1 or 2, wherein said peel preventing layer is constituted of amorphous silicon oxide, said crystalline undercoat layer is constituted of zirconium oxide, and said photocatalyst layer is constituted of crystalline titanium oxide.

4. The member having a photocatalytic function according to claim 3, wherein said crystalline undercoat layer comprises monoclinic zirconium oxide crystals.

5. The member having a photocatalytic function according to any one of claims 1 to 4, wherein a dead layer which is observed as a halo pattern in an electron diffraction image is not substantially present between said undercoat layer and said photocatalyst layer.

6. Multiple glass comprising an outdoor side glass sheet and an indoor side glass sheet arranged to face each other, wherein a peel preventing layer whose main component is an oxide, an oxynitride and a nitride containing at least one of silicon and tin is provided on the outdoor side surface of said outdoor side glass sheet, a crystalline undercoat layer having a thickness of 2 nm or more and 25 nm or less is provided on said peel preventing layer, a photocatalyst layer having a thickness of 2 nm or more and 15 nm or less is formed on said crystalline undercoat layer, and a heat ray reflecting film (low emissivity film) is formed on the indoor side surface of said outdoor side glass sheet.

7. Multiple glass comprising an outdoor side glass sheet and an indoor side glass sheet arranged to face each other, wherein a peel preventing layer whose main component is an oxide, an oxynitride and a nitride containing at least one of silicon and tin is provided on the outdoor side surface of said outdoor side glass sheet, a crystalline undercoat layer having a thickness of 3 nm or more and 5 nm or less is provided on said peel preventing layer, a photocatalyst layer having a thickness of 3 nm or more and 5 nm or less is formed on said crystalline undercoat layer, and a heat ray reflecting film (low emissivity film) is formed on the indoor side surface of said outdoor side glass sheet.

8. The multiple glass according to claim 6 or 7, wherein said peel preventing layer is constituted of amorphous silicon oxide, said crystalline undercoat layer is constituted of zirconium oxide, said photocatalyst layer is constituted of crystalline titanium oxide, and said heat ray reflecting film has a multilayered structure in which zinc oxide, silver, zinc oxide, silver and zinc oxide are laminated on the surface of said glass sheet in this order.

9. The multiple glass according to claim 8, wherein said crystalline undercoat layer comprises monoclinic zirconium oxide crystals.

10. The multiple glass according to any one of claims 6 to 9, wherein a dead layer which is observed as a halo pattern in an electron diffraction image is not substantially present between said undercoat layer and said photocatalyst layer.

FIG. 1

Peel preventing layer (SiO$_2$) 1

Crystalline undercoat layer (ZrO$_2$) 2

Photocatalyst layer (TiO$_2$) 3

FIG. 2

20

1

10

2

3

Low emissivity layer 4

FIG. 3

G/SiO2(*nm)/ZrO2(10nm)/TiO2(10nm)

Tm b*

Tm a*

EP 1 640 149 A1

FIG. 4

G/SiO2(*nm)/ZrO2(10nm)/TiO2(10nm)

Rm a*

Rm b*

FIG. 5

Y-axis: Visible light reflectance R (%)

X-axis: TiO₂ film thickness (nm)

R=20%

R=15%

G/SiO2(10nm)/ZrO2(10nm)/TiO2(*nm)

FIG. 6

G/SiO2(10nm)/ZrO2(*nm)/TiO2(10nm)

Visible light reflectance R (%)

R=20%

R=15%

ZrO₂ film thickness (nm)

EP 1 640 149 A1

FIG. 7

FIG. 8

G/SiO2(10nm)/ZrO2(*nm)/TiO2(10nm)

Multiple glass comprised of the above photocatalyst layer + Low-E film

R=20%

R=15%

Visible light reflectance R (%)

ZrO2 film thickness (nm)

FIG. 9

G/SiO2(10nm)/ZrO2(10nm)/TiO2(*nm)

Distance between chromaticity coordinates

D=3.5

TiO$_2$ film thickness (nm)

EP 1 640 149 A1

FIG. 10

FIG. 11

EP 1 640 149 A1

G/SiO2(10nm)/ZrO2(*nm)/TiO2(10nm)

D=3.5

ZrO₂ film thickness (nm)

FIG. 12

EP 1 640 149 A1

FIG. 13

**G/SiO2(10nm)/ZrO2(10nm)/TiO2(*nm)**
Multiple glass comprised of the above photocatalyst layer + Low-E film

D=3.5

Distance between chromaticity coordinates

TiO₂ film thickness (nm)

EP 1 640 149 A1

FIG. 14

G/SiO2(10nm)/ZrO2(10nm)/TiO2(*nm)
Multiple glass comprised of the above photocatalyst layer + Low-E film

TiO2:80nm

TiO2:0nm

TiO2:100nm

TiO2:25nm

Rm_b*

Rm_a*

FIG. 15

G/SiO2(10nm)/ZrO2(*nm)/TiO2(10nm)

Multiple glass comprised of the above photocatalyst layer + Low-E film

D=3.5

Distance between chromaticity coordinates

ZrO$_2$ film thickness (nm)

EP 1 640 149 A1

FIG. 16

G/SiO2(10nm)/ZrO2(*nm)/TiO2(10nm)
Multiple glass comprised of the above photocatalyst layer + Low-E film

ZrO2:90nm

ZrO2:100nm

ZrO2:0nm

ZrO2:120nm

ZrO2:20nm

Rm b*

Rm a*

EP 1 640 149 A1

FIG. 17

● Low-E film configuration

: FL/ZnO(35.2nm)/Ag(6.3nm)/ZnO(85.2nm)/Ag(12.1nm)/ZnO(35.2nm)

| | Multiple: Low-E only | | | Multiple: AKM5 + Low-E | | | Multiple: AKM10 + Low-E | | |
|---|---|---|---|---|---|---|---|---|---|
| | T | R1_outside | R2_inside | T | R1_outside | R2_inside | T | R1_outside | R2_inside |
| a* | −1.51 | −5.00 | −4.52 | −1.56 | −4.46 | −4.33 | −1.62 | −3.55 | −4.05 |
| b* | −1.58 | −0.83 | 3.59 | −0.92 | −3.00 | 1.75 | 0.64 | −6.76 | −1.78 |
| VIS | 71.20 | 12.51 | 14.32 | 70.16 | 13.8 | 15.58 | 67.79 | 16.27 | 16.90 |

| | Multiple: AKM15 + Low-E | | | Multiple: AKM20 + Low-E | | |
|---|---|---|---|---|---|---|
| | T | R1_outside | R2_inside | T | R1_outside | R2_inside |
| a* | −1.57 | −3.00 | −4.02 | −1.39 | −2.85 | −4.24 |
| b* | 2.24 | −9.04 | −4.39 | 3.17 | −9.33 | −5.33 |
| VIS | 63.69 | 21.64 | 20.41 | 59.9 | 26.27 | 23.49 |

VIS = Visible

T = Transmittance

R1_outside = Outdoor side reflection

R2_inside = Indoor side reflection

<div align="center">**INTERNATIONAL SEARCH REPORT**</div>

| International application No. |
| --- |
| PCT/JP2004/008099 |

**A. CLASSIFICATION OF SUBJECT MATTER**
Int.Cl⁷ B32B9/00, B01J35/02, C03C27/06

According to International Patent Classification (IPC) or to both national classification and IPC

**B. FIELDS SEARCHED**

Minimum documentation searched (classification system followed by classification symbols)
Int.Cl⁷ B32B1/00-35/00, B01J35/02, C03C15/00-23/00, 27/00-29/00

Documentation searched other than minimum documentation to the extent that such documents are included in the fields searched
Jitsuyo Shinan Koho          1926-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | WO 2002/040417 A  (PPG INDUSTRIES OHIO, INC.),<br>23 May, 2002 (23.05.02),<br>Full text<br>& JP 2004-513864 A<br>Claims; Par. Nos. [0020] to [0022]; drawings | 1,2,5-7,10<br>3,4,8,9 |
| Y | JP 10-66878 A  (Bridgestone Corp.),<br>10 March, 1998 (10.03.98),<br>Claims; Par. No. [0007]<br>(Family: none) | 3,4,8,9 |
| Y | JP 2003-112054 A  (Mitsubishi Heavy Industries,<br>Ltd.),<br>15 April, 2003 (15.04.03),<br>Claims; examples<br>(Family: none) | 3,4,8,9 |

☒ Further documents are listed in the continuation of Box C.          ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07 September, 2004 (07.09.04) | Date of mailing of the international search report<br>28 September, 2004 (28.09.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| | International application No. |
|---|---|
| | PCT/JP2004/008099 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-315889 A (Nippon Sheet Glass Co., Ltd.),<br>05 December, 1995 (05.12.95),<br>Claims; example 3; table 3; Fig. 4<br>(Family: none) | 8,9 |
| A | JP 11-511109 A (HELLER, Adam),<br>28 September, 1999 (28.09.99),<br>Full text<br>& WO 97/07069 A | 1-10 |
| A | JP 2001-121003 A (Nippon Sheet Glass Co.,<br>Ltd.),<br>08 May, 2001 (08.05.01),<br>Full text<br>(Family: none) | 1-10 |
| A | JP 2002-524383 A (PPG INDUSTRIES OHIO, INC.),<br>06 August, 2002 (06.08.02),<br>Full text<br>& WO 2000/015571 A | 1-10 |
| A | JP 11-512337 A (Saint-Gobain Vitrage),<br>26 October, 1999 (26.10.99),<br>Full text<br>& WO 97/10186 A | 1-10 |

Form PCT/ISA/210 (continuation of second sheet) (January 2004)